# EUROPEAN PATENT SPECIFICATION

(11) **EP 3 939 763 B1**
(45) Date of publication and mention of the grant of the patent: **27.11.2024**
(21) Application number: 20769347.4
(22) Date of filing: 04.03.2020
(51) Int. Cl.: B29C 33/38, B29C 33/30, B29C 33/42

(54) **METHOD FOR MANUFACTURING TIRE FORMING MOLD**
VERFAHREN ZUR HERSTELLUNG EINER REIFENFORMUNGSFORM
PROCÉDÉ DE FABRICATION D'UN MOULE DE FORMATION DE PNEU

(30) Priority: 14.03.2019 JP 2019046715
(43) Date of publication of application: 19.01.2022
(73) Proprietor: BRIDGESTONE CORPORATION, Chuo-ku Tokyo 104-8340 (JP)
(72) Inventor: ISHIHARA, Yasuyuki, Tokyo 104-8340 (JP)
(74) Representative: Marks & Clerk LLP
(86) International application number: PCT/JP2020/009123
(87) International publication number: WO 2020/184328

(56) References cited:
- WO-A1-2010/096072
- CN-A- 106 794 650
- JP-A- 2001 334 531
- JP-A- 2005 169 660
- JP-A- 2006 103 079
- JP-A- 2006 103 079
- JP-A- 2012 106 455
- JP-A- 2012 106 455

## Description

### BACKGROUND OF THE INVENTION

### Field of the Invention

The present invention relates to a method of manufacturing a mold for molding tire by using a casting mold for casting the mold for molding tire.

### Related Background of the Invention

A mold for molding tire is provided in a tire vulcanizing apparatus to mold the tire during vulcanization of the tire (unvulcanized tire) . In addition, the mold for molding tire is usually manufactured by casting according to their shape and required characteristics. As a method of manufacturing such mold for molding tire, a method of manufacturing has been known in which an original mold, a rubber mold, a gypsum mold and the mold for molding tire (tire vulcanization mold) are produced in order (see Patent Document 1).

In a conventional method of manufacturing the mold for molding tire described in Patent Document 1, the original mold is formed into a shape corresponding to a tread shape of the tire, and a rubber mold is molded by the original mold. Next, the gypsum mold is molded by the rubber mold, and the mold for molding tire is cast using the gypsum mold. But the original mold is formed into a complicated shape corresponding to the tread shape of the tire having various grooves. Therefore, it requires a lot of trouble to produce the original mold, and as the tread shape of the tire becomes complicated, manufacturing efficiency of the original mold and the mold for molding tire is lowered. In addition, it is difficult to form a wall surface of the groove of the original mold into a complicated shape.

In a tire having sipes (fine grooves) in the tread part, a sipe is molded in the tread part by a projection of the mold for molding tire. If the projection is formed in the mold for molding tire by casting, the projection is likely to be damaged by a force applied during molding of the tire. Therefore, a blade for molding the sipe is formed by press forming of a high-strength plate material (for example, steel) . A part of the blade is cast in the mold for molding tire, the blade is thereby fixed to the mold for molding tire. In addition, when producing the original mold, a plate-like projecting member corresponding to a blade (a blade for the original mold) is attached to the original mold.

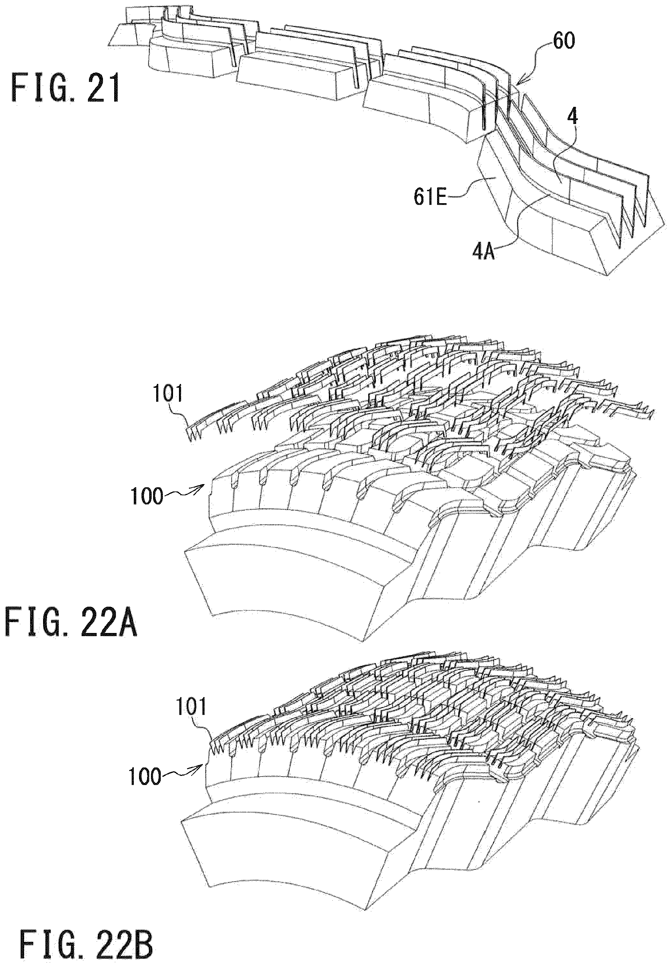

Figs. 22A,22B are perspective views showing an example of a process for producing the original mold 100 of the conventional mold for molding tire. Fig. 22A shows the original mold 100 during production, and Fig.22B shows the original mold 100 after production.

As shown in the figures, the projecting member 101 is attached so as to project toward the original mold 100, thus the original mold 100 is produced. By the projecting member 101, a groove part is formed in the rubber mold, and a blade is inserted into the groove part of the rubber mold. The blade is transferred from the rubber mold to a gypsum mold, and a part of the blade is cast in the mold for molding tire.

Since it is necessary to attach a plurality of projecting members 101 in the original mold 100 corresponding to the number of sipes, it requires a lot of work to produce the original mold 100. In addition, the projecting member 101 is smaller than the blade and is easily deformed by the press forming. Therefore, if the blade and the projecting member 101 are molded by the same pressing mold with the same pressing pressure, the projecting member 101 is deformed larger compared with the blade. If a difference arises between dimension of the projecting member 101 and dimension of the blade in this way, the rubber mold is deformed by the blade inserted into the groove. In this case, the shape of the rubber mold is likely to be damaged, or a deviation is likely to occur in the rubber molding pattern. When gypsum enters between the blade and the rubber mold, burrs may be generated in the gypsum mold. Due to the work of removing burrs, the manufacturing efficiency of the mold for molding tire is further reduced.

### Prior Art

### Patent Literature

Patent Literature 1: Japanese Patent Application Laid-Open No. JP 2005 169929 A Attention is also drawn to the disclosure of JP 2012 106455 A which discloses a method of manufacturing a mold for molding a tire that is considered to comprise method steps corresponding to: producing an original mold having a tread shaping part including a tread shape of the tire, producing an intermediate mold having a transfer part to which the tread shaping part of the original mold is transferred, forming a casting mold by the transfer part of the intermediate mold, and casting the mold for molding tire using the casting mold, wherein the original mold is produced by forming a surface part of the tread shaping part and attaching the surface part to a base part of the original mold, wherein a projection of a shape corresponding to a cast-in part of a blade for molding sipe is formed integrally with the surface part of the tread shaping part, a groove part is formed in the transfer part of the intermediate mold by the projection of the surface part, and the cast-in part of the blade is inserted into the groove part of the transfer part.

JP 2005 169660 A discloses when a dummy sipe is inserted in the sipe part of a master in a process for manufacturing a casting mold comprising gypsum, a recessed groove is preformed along the tread surface of the master in the thickness direction of the dummy sipe and, in a state that the dummy sipe is inserted in the sipe part of the master, the recessed groove is positioned in the vicinity of the tread surface.

### SUMMARY OF THE INVENTION

### Problems to be Solved by Invention

The present invention has been made in view of conventional problems of the mold for molding tire that is cast using a mold, and its object is to easily manufacture a mold for
molding tire by easily producing an original mold of the mold for molding tire.

### Means for solving Problems

The present invention is related to a method of manufacturing a mold for molding tire as claimed in claim 1.

### EFFECTS OF THE INVENTION

According to the present invention, the original mold of the mold for molding tire can be easily produced, and the mold for molding tire can be easily manufactured.

### BRIEF DESCRIPTION OF THE DRAWINGS

Figs.1A to 1C are perspective views showing a manufacturing process of a mold for molding tire of a 1st example, which is not according to the invention but to which the invention may be applied.
Figs.2A to 2C are perspective views showing a manufacturing process of a mold for molding tire of the 1st example.
Figs.3A to 3C are perspective views showing a manufacturing process of a mold for molding tire of the 1st example.
Figs.4A to 4C are perspective views showing a manufacturing process of a mold for molding tire of the 1^{st} example.
Fig.5 is a perspective view showing an original mold of the mold for molding tire of the 1st example.
Fig.6 is a perspective view showing a base part of the original mold of the 1st example.
Fig.7A 7B are perspective views showing a surface part of a tread shaping part of the 1st example.
Fig. 8 is a perspective view showing the original mold of the mold for molding tire of the 1st example.
Fig. 9 is a perspective view showing the original mold of the mold for molding tire of a 2nd example, which is not in accordance with the present invention but to which the invention may be applied.
Fig.10 is a perspective view showing a base part of the original mold of the 2nd example.
Figs. 11A , 11B are perspective views showing a surface part of a tread shaping part of the 2nd example.
Fig. 12 is a perspective view showing an original mold of the mold for molding tire of the 2nd example.
Fig. 13 is a perspective view showing an original mold of the mold for molding tire of a 3rd example, which is not in accordance with the present invention but to which the invention may be applied.
FIG.14 is a perspective view showing the base part of the original mold of the 3rd example.
Figs . 15A , 15B are perspective views showing a surface part of a tread shaping part of the 3rd example.
Fig. 16 is a perspective view showing an original mold of the mold for molding tire of the 3rd example.
Fig. 17 is a perspective view showing an original mold of the mold for molding tire of a 4th example, which is not in accordance with the present invention but to which the invention may be applied.
Fig. 18 is a perspective view showing a base part of the original mold of the 4th example.
Figs. 19A , 19B are perspective views showing a surface part of a tread shaping part of the 4th example.
Fig. 20 is a perspective view showing an original mold of the mold for molding tire of the 4th example.
Fig.21 is perspective view showing a part of the surface part of the tread shaping part of a 1^{st} embodiment.
Figs.22A,22B are perspective views showing an example of conventional process of producing an original mold of the mold for molding tire.

### DESCRIPTION OF THE PREFERRED EMBODIMENTS

One embodiment of a method of manufacturing a mold for molding tire of the present invention will be described with reference to the drawings.

In the method of manufacturing the mold for molding tire of the present example, the mold for molding tire is manufactured by casting. In addition, the mold for molding tire of the present example is a metal mold for molding tire and is used during vulcanization of the tire. The tire (unvulcanized tire) is vulcanized while being molded by the mold for molding tire. Hereinafter, a plurality of examples and an embodiment of the method of manufacturing the mold for molding tire will be described in order.

### [1st example]

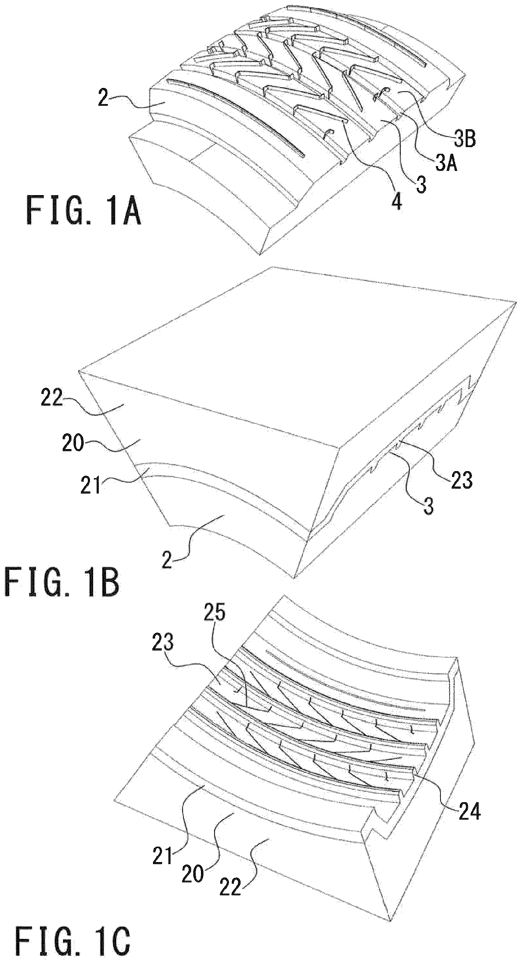

Figs.1A to 1C to Figs.4A to 4C are perspective views showing the manufacturing process of the mold for molding tire 1 of the 1st example.

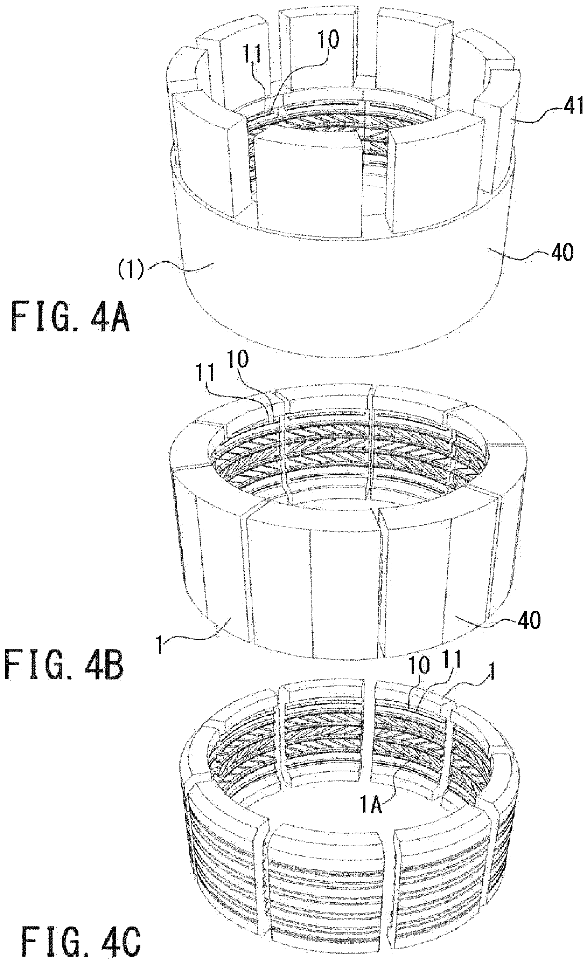

As shown in the figures, the mold for molding tire 1 (see Fig.4C) is manufactured by a casting production process using a transfer method. In addition, in the mold for molding tire 1, a plurality of sipes (fine grooves) in the tread part of the tire are molded by a plurality of blades 10.

At first, the original mold 2 of the mold for molding tire 1 is produced (see Fig. 1A) . The original mold 2 is a master model including a shape of the tread part (a tread shape) of the tire and has a tread shaping part 3 and a plurality of projections 4 formed projecting on the tread shaping part 3. Here, the tread shape of the tire is a shape of a part of the tread part in the tire circumferential direction (a divided part that is one of a plurality of divided parts of the tread part divided in the tire circumferential direction), and the original mold 2 is formed in a shape corresponding to the part of the tread part in the tire circumferential direction.

The tread shaping part 3 is a molding part of the original mold 2 and is formed in a shape corresponding to the tread shape of the tire. In addition, a plurality of grooves 3A are formed in the tread shaping part 3 corresponding to the grooves of the tread part of the tire, and a plurality of land parts 3B are formed in the tread shaping part 3 corresponding to a plurality of land parts of the tread part of the tire. The projection 4 is provided at a position corresponding to the sipe (sipe position) of the tire in the tread shaping part 3 and is formed in an elongated plate-shape extending along the sipe position. The land part 3B is partitioned by the grooves 3A, and the projection 4 is each formed in a plurality of positions on the land part 3B.

Next, an intermediate mold 20 is molded by the tread shaping part 3 of the original mold 2, the intermediate mold 20 is thereby produced (see Figs. 1B and 1C). The intermediate mold 20 is a rubber mold produced at an intermediate stage while manufacturing the mold for molding tire 1 and has a rubber part 21 formed of a rubber material, a reinforcing part 22 that reinforces the rubber part 21, and a transfer part 23 that is a part of the rubber part 21. The rubber part 21 and the transfer part 23 are molded by the tread shaping part 3 of the original mold 2, and the tread shaping part 3 including the tread shape of the tire is transferred to the transfer part 23. In addition, a plurality of projections 24 are formed on the transfer part 23 by the plurality of grooves 3A of the tread shaping part 3, and a plurality of groove parts 25 are formed on the transfer part 23 by a plurality of projections 4 of the tread shaping part 3.

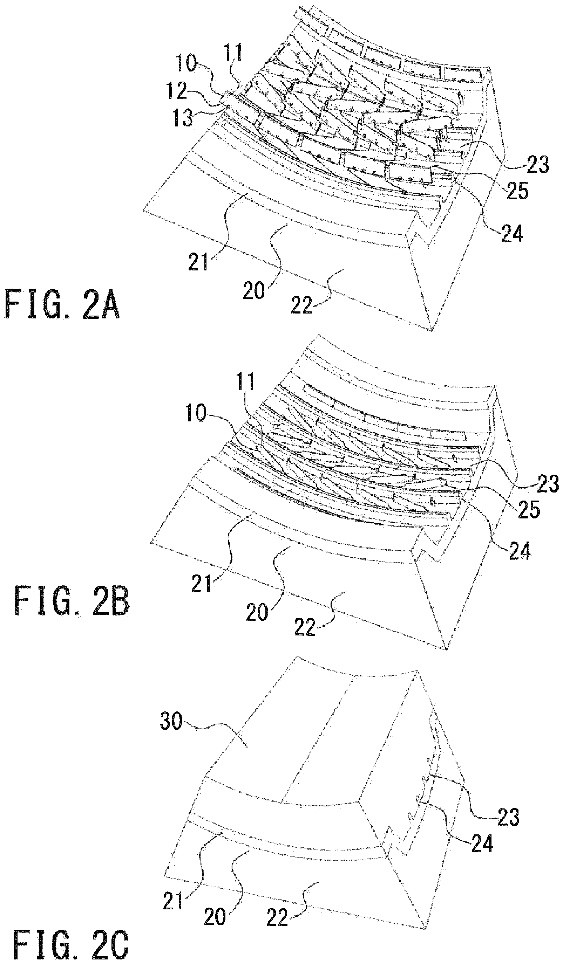

The groove part 25 of the transfer part 23 is a gap for holding the blade 10 (see Fig. 2A) and is formed in a slit-like shape. The blade 10 is a plate member (a sipe blade) for molding sipe and has a molding part 11 for molding the sipe in the tread part of the tire, a cast-in part 12 that is to be cast in the mold for molding tire 1 and a plurality of holes 13 formed in the cast-in part 12. The molding part 11 is located on one edge side of the blade 10, and the cast-in part 12 is located on the other edge side of the blade 10. The projection 4 (see Fig. 1A) of the tread shaping part 3 is formed in a shape corresponding to the cast-in part 12 of the blade 10. Therefore, the groove part 25 of the transfer part 23 is formed by the projection 4 in a shape corresponding to the cast-in part 12 of the blade 10.

The cast-in part 12 of the blade 10 is inserted into the groove part 25 of the transfer part 23 (see Fig.2B), the cast-in part 12 of the blade 10 is thereby fitted in the groove part 25 and held in the transfer part 23 of the intermediate mold 20. The molding part 11 of the blade 10 projects from the transfer part 23 of the intermediate mold 20. In that state, the casting mold 30 is molded by the transfer part 23 of the intermediate mold 20, and the casting mold 30 is produced (see Fig. 2C) . The casting mold 30 is formed of a collapsible mold material, here it is a gypsum mold formed by gypsum. The molding part 11 of the blade 10 is embedded in the casting mold 30 and attached to the casting mold 30.

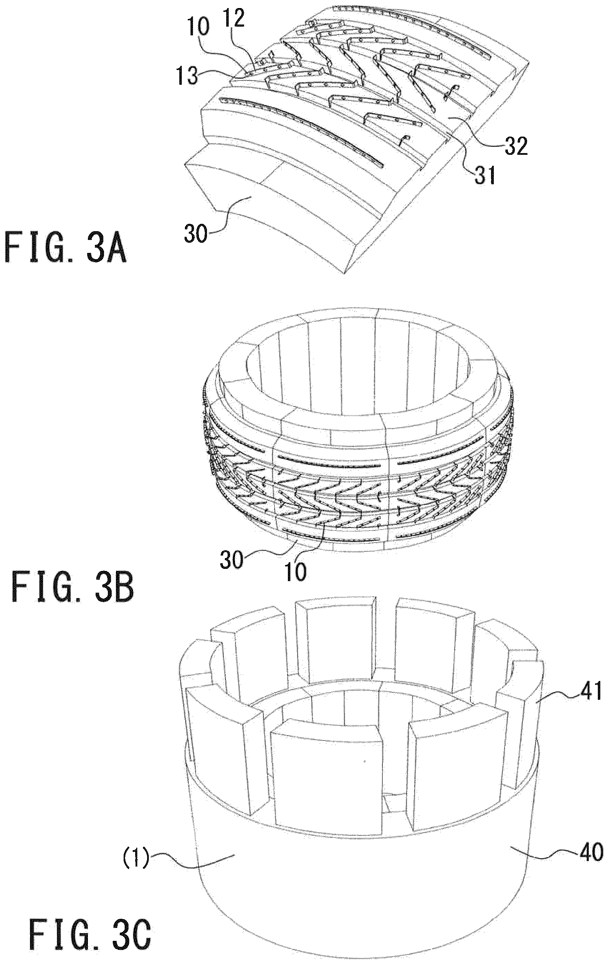

When the casting mold 30 is separated from the intermediate mold 20, the cast-in part 12 of the blade 10 is removed from the intermediate mold 20 (see Fig. 3A) . In addition, the molding part 11 of the blade 10 is held in the casting mold 30, and the casting mold 30 having the plurality of blades 10 is produced. The cast-in part 12 of the blade 10 is located outside the casting mold 30 and projects from the casting mold 30. The casting mold 30 is molded into a shape corresponding to the tread shaping part 3 of the original mold 2 and the tread shape of the tire by the transfer part 23 of the intermediate mold 20. In addition, a plurality of grooves 31 and land parts 32 are formed in the casting mold 30 by the plurality of projections 24 of the transfer part 23. The land part 32 is partitioned by the grooves 31, and the blades 10 are attached to a plurality of position of the land part 32.

Next, the mold for molding tire 1 is cast using the casting mold 30. Specifically, the plurality of casting molds 30 are produced respectively, and the plurality of casting mold 30 are combined in an annular shape (see Fig. 3B) . Metal (for example, aluminum alloy) is solidified around the annular mold 30 (see Fig. 3C) and a cast metal (a mold cast metal 40) of the mold for molding tire 1 is cast. The mold cast metal 40 is formed in an annular shape and includes a plurality of molds for molding tire 1. A plurality of risers 41 are connected to the mold cast metal 40. The cast-in part 12 of the blade 10 is cast in the mold for molding tire 1 while the mold for molding tire 1 (mold cast metal 40) is cast using the casting mold 30. The cast-in part 12 of the blade 10 is thereby fixed to the mold for molding tire 1.

By destructing the casting mold 30, the casting mold 30 is removed from the mold cast metal 40 of the mold for molding tire 1 (see Fig. 4A) . Subsequently, the riser 41 is removed from the mold cast metal 40, and the mold cast metal 40 is divided into a plurality of parts in the circumferential direction (see Fig. 4B) . In addition, the outer surface part (outer circumferential part, end surface part, etc.) of the mold cast metal 40 is processed (see Fig. 4C) . A plurality of molds for molding tire 1 are produced. The plurality of molds for molding tire 1 have the plurality of blades 10 respectively and are combined in an annular shape when vulcanizing (when molding) the tire. The molding part 11 of the blade 10 is located outside the mold for molding tire 1 and projects from the mold for molding tire 1. In addition, a plurality of projection parts 1A are formed in the mold for molding tire 1 by the plurality of grooves 31 of the casting mold 30.

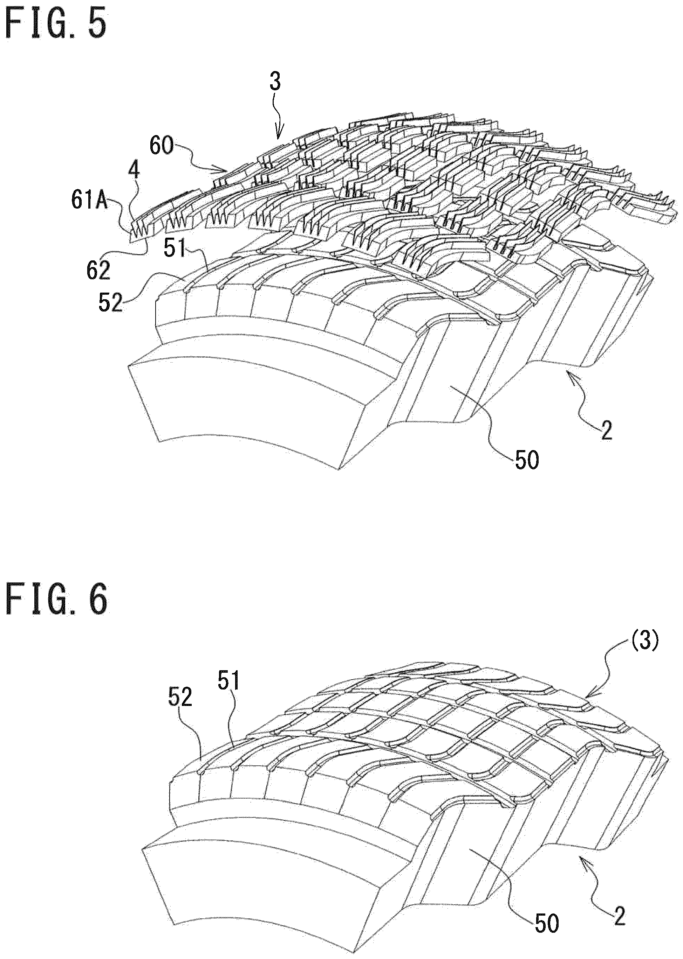

Fig. 5 is a perspective view showing the original mold 2 of the mold for molding tire 1 of the 1st example and shows the disassembled original mold 2. In Fig. 5, the shape of the original mold 2 is simplified, and the original mold 2 of a shape different from the original mold 2 shown in Fig.1 A is shown schematically.

As shown in the figure, the original mold 2 has a base part 50 and a surface part 60 of a tread shaping part 3 thinner than the base part 50. The base part 50 is the base part of the original mold 2 excluding the surface part 60 from the original mold 2, and the surface part 60 is a part on the surface side of the tread shaping part 3 of the original mold 2. In addition, the surface part 60 is formed in a shape corresponding to the surface shape of the tread shaping part 3 and includes the surface shape of the tread shaping part 3. The base part 50 and the surface part 60 of the original mold 2 are produced separately. The original mold 2 is produced by forming the surface part 60 of the tread shaping part 3 and attaching the surface part 60 to the base part 50 of the original mold 2.

Fig. 6 is a perspective view showing the base part 50 of the original mold 2 of the 1st example.

As shown in the figure, the base part 50 of the original mold 2 is a part excluding at least a part (the surface part 60) on the surface side of the tread shaping part 3 from the original mold 2 and has a plurality of grooves 51 and a plurality of covering parts 52. The base part 50 is produced by machining using a processing machine (for example, a NC processing machine) and is formed of a material (for example, various chemical wood (synthetic wood) and aluminum alloy) that is easy to machine and hardly subject to a dimensional change.

The groove 51 and the covering part 52 of the base part 50 are formed on the surface part 60 side (tread shaping part 3 side) of the base part 50. The groove 51 of the base part 50 is a bottom part of the groove 3A of the tread shaping part 3 and is formed in a position corresponding to the groove 3A (groove of the tread part of the tire) of the tread shaping part 3. The covering part 52 of the base part 50 is a smooth surface and is formed in a position corresponding to the land part 3B of the tread shaping part 3 (land part of the tread part of the tire). The surface part 60 of the tread shaping part 3 is attached to the covering part 52, and the covering part 52 is covered with the surface part 60. In addition, the covering part 52 is partitioned by the grooves 51, and the groove 51 is formed between the covering parts 52. The base part 50 is a block-like retainer and holds the surface part 60 on the covering part 52.

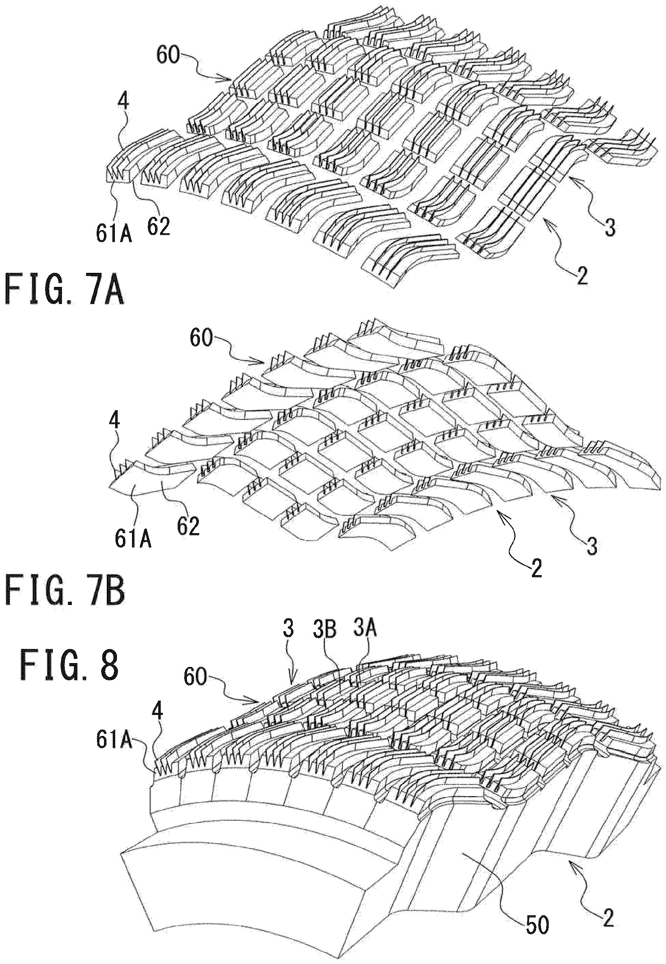

Figs. 7A, 7B are perspective views showing the surface part 60 of the tread shaping part 3 of the 1st example and show the surface part 60 viewed from two directions. Fig. 7A shows the surface part 60 viewed from the surface side of the tread shaping part 3, and Fig. 7B shows the surface part 60 viewed from the base part 50 side.

As shown in the figures, the surface part 60 of the tread shaping part 3 is a part containing at least a part of the tread shaping part 3 on the surface side and is divided into a plurality of surface pieces 61A. The surface piece 61A is a part of the surface part 60 of the tread shaping part 3 and is formed in a shape including a part of the tread shaping part 3 on its surface side.

The plurality of surface pieces 61A of the surface part 60 are shaped and formed respectively by a three-dimensional shaping method (for example, an optical shaping method, a laser sintering lamination method) that is a direct modeling method. By a three-dimensional shaping apparatus (for example, an optical shaping apparatus, a laser sintering shaping apparatus, a 3D printer), the surface piece 61A of the surface part 60 is produced integrally based on three-dimensional shape data. The surface piece 61A of the surface part 60 is formed of, for example, a photosetting resin, a thermoplastic resin, and a sintered metal corresponding to a type of the three-dimensional shaping method. Whereas the surface piece 61A of the surface part 60 may be a laminated product obtained by laminating paper.

The surface piece 61A of the surface part 60 is the land part 3B of the tread shaping part 3 and is formed in a surface shape corresponding to the surface shape of the land part 3B. In addition, the plurality of surface pieces 61A are divided at a position corresponding to the groove 3A of the tread shaping part 3 in the surface part 60. The surface piece 61A of the surface part 60 has an attaching part 62 formed on the base part 50 side of the surface piece 61A and projections 4 formed projecting at the tread shaping part 3. The attaching part 62 is a smooth surface in a shape conforming to the covering part 52 of the base part 50 and adhered to the covering part 52 while being overlapped with the covering part 52. The attaching part 62 is attached to the covering part 52 by attaching means (for example, adhesion, joining), and the surface piece 61A of the surface part 60 is attached to the covering part 52 of the base part 50. The covering part 52 is covered with the surface piece 61A.

The projection 4 is provided at a sipe position of the tire in the surface piece 61A of the surface part 60 and is formed in an elongated plate that extends along the sipe position. In addition, the projection 4 is a projectedpiece shaped corresponding to the cast-in part 12 of the blade 10 and is formed integrally with the surface piece 61A and the surface part 60. Here, the plurality of projections 4 are formed projecting at the surface piece 61A.

Fig. 8 is a perspective view showing the original mold 2 of the mold for molding tire 1 of the 1st example and shows the original mold 2 after production.

As shown in the figure, the surface part 60 is formed as being divided into the plurality of surface pieces 61A, and the plurality of surface pieces 61A of the surface part 60 are attached to the base part 50, the surface piece 61A of the surface part 60 and the base part 50 are thereby combined to produce the original mold 2 having the plurality of projections 4. In addition, the plurality of grooves 3A and the plurality of land parts 3B are formed in the tread shaping part 3 of the original mold 2 by the surface pieces 61A of the surface part 60 and the base part 50. The groove 3A is formed between the surface pieces 61A by a gap between the adjacent surface pieces 61A and the groove 51 of the base part 50. The land part 3B is formed by the surface piece 61A.

The projection 4 is formed integrally with the surface part 60 (the surface piece 61A) of the tread shaping part 3, so that the groove part 25 is formed in the transfer part 23 of the intermediate mold 20 by the projection 4 of the surface part 60 of the tread shaping part 3 (see Fig. 1C) . Thereafter, the cast-in part 12 of the sipe molding blade 10 is inserted into the groove part 25 of the transfer part 23 (see Figs. 2A,2B) . When the blade 10 is produced by the press forming of a plate material, a difference may be caused between actual dimension of the blade 10 (for example, the dimension of outer circumferential shape, the dimension of bending shape) and a design dimension of the blade 10 (for example, 0.02 to 1 mm difference). In order to cope with such difference in dimension, the dimension of the projection 4 of the surface part 60 is corrected based on the actual dimension of the cast-in part 12 of the blade 10, and the projection 4 is formed on the surface part 60 with the corrected dimension.

Before production of the surface part 60 of the tread shaping part 3, the blade 10 is produced and the actual dimension of the cast-in part 12 of the blade 10 is measured. The projection 4 is formed on the surface part 60 with the actual dimension of the measured cast-in part 12. The projection 4 is thereby corrected so as to conform to the actual dimension of the cast-in part 12. Whereas the dimension of the projection 4 may be corrected based on past data of the difference between the actual dimension of the cast-in part 12 and the design dimension of the cast-in part 12. In addition, when the actual dimension of the cast-in part 12 is the same as the design dimension, the projection 4 of the surface part 60 is formed with the design dimension of the cast-in part 12.

As described above, in the method of manufacturing the mold for molding tire 1 of the 1st example, the original mold 2 can be easily produced, so that the mold for molding tire 1 easily manufactured. In addition, the surface part 60 of the tread shaping part 3 can be reinforced by the base part 50, so that the changes in shape and dimension of the surface part 60 can be restrained. Even when deformation occurs in the surface part 60 before attaching to the base part 50, the shape of the surface part 60 can be corrected by attaching the surface part 60 to the base part 50. It is also possible to correspond to the tread shaping part 3 of a complicated shape, and the tread shaping part 3 can be easily formed.

By forming the surface piece 61A and the surface part 60 by the three-dimensional shaping method, the tread shaping part 3 of the original mold 2 can be accurately formed, and time and cost required in the production of the original mold 2 can be reduced. In addition, formation of a fine shape or formation of parts that are hard to process can be easily performed, so that formation efficiencies of the surface piece 61A and the surface part 60 can be improved.

By dividing the surface part 60 of the tread shaping part 3 into the plurality of surface pieces 61A, members to be integrally formed can be made smaller. Therefore, the surface piece 61A can be accurately formed, and deformation of the surface piece 61A while forming can be restrained. Since the surface part 60 is formed for each component part (surface piece 61A), the surface part 60 can be easily formed. By forming the projection 4 integrally with the surface part 60, the original mold 2 having the projections 4 can be easily produced and production time of the original mold 2 can be shortened. It can correspond to projection 4 of complicated shape as well.

By correcting the dimension of the projection 4 based on the actual dimension of the cast-in part 12 of the blade 10, the difference between the dimension of the projection 4 and the actual dimension of the cast-in part 12 can be reduced. As a result, the cast-in part 12 of the blade 10 can be easily inserted into the groove part 25 of the transfer part 23 of the intermediate mold 20. In addition, it is possible to restrain deformation of the transfer part 23 by the cast-in part 12, and it is also possible to restrain generation of a gap between the cast-in part 12 and the transfer part 23.

In addition, the projection 4 may be formed so as not be formed integrally with the surface part 60 and the surface piece 61A of the tread shaping part 3. For example, when the blade 10 is not provided in the mold for molding tire 1, the projection 4 is not formed on the surface part 60 and the surface piece 61A of the tread shaping part 3. In addition, a part of the tread shaping part 3 may be formed by the surface part 60, and the entire tread shaping part 3 may be formed by the surface part 60. The tread shaping part 3 may be formed by one surface part 60 without dividing the surface part 60 of the tread shaping part 3.

Next, other examples (2nd to 4th examples and 1st embodiment) of the method of manufacturing mold for molding tire 1 will be described. Regarding the method of manufacturing the mold for molding tire 1 of the 2nd to 4th examples and 1st embodiment, the description of the same matters as the method of manufacturing the mold for molding tire 1 of the 1st example is omitted. In addition, regarding configurations of the 2nd to 4th examples and 1st embodiment, terms of the configurations corresponding to the configurations of the 1st example are used the same terms as those of the configurations of the 1st example.

### [2nd Example]

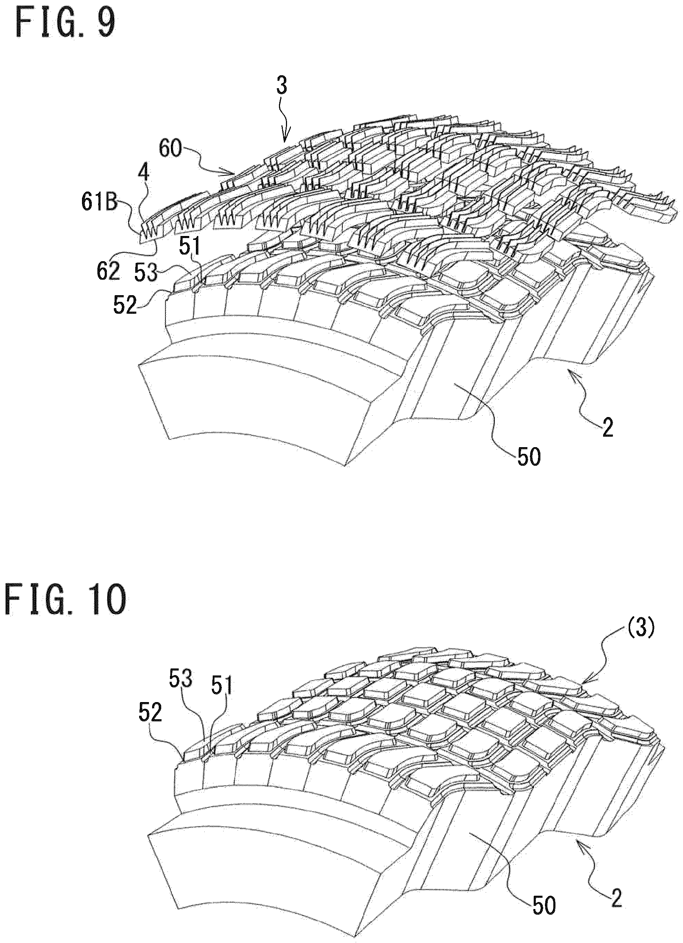

Fig. 9 is a perspective view showing the original mold 2 of the mold for molding tire 1 of the 2nd example and shows the decomposed original mold 2. Fig. 10 is a perspective view showing a base part 50 of the original mold 2 of the 2nd example.

As shown in the figure, the base part 50 of the original mold 2 has a convex part 53 formed in the covering part 52. The convex part 53 is a mounting part to which the surface part 60 (a surface piece 61B) of a tread shaping part 3 is mounted and is formed in each of a plurality of the covering parts 52 of the base part 50. In addition, the convex part 53 is formed in a part excluding the edge part of the covering part 52 and projects toward the surface part 60. A plurality of convex parts 53 are convexly formed in parts on the surface part 60 side of the base part 50.

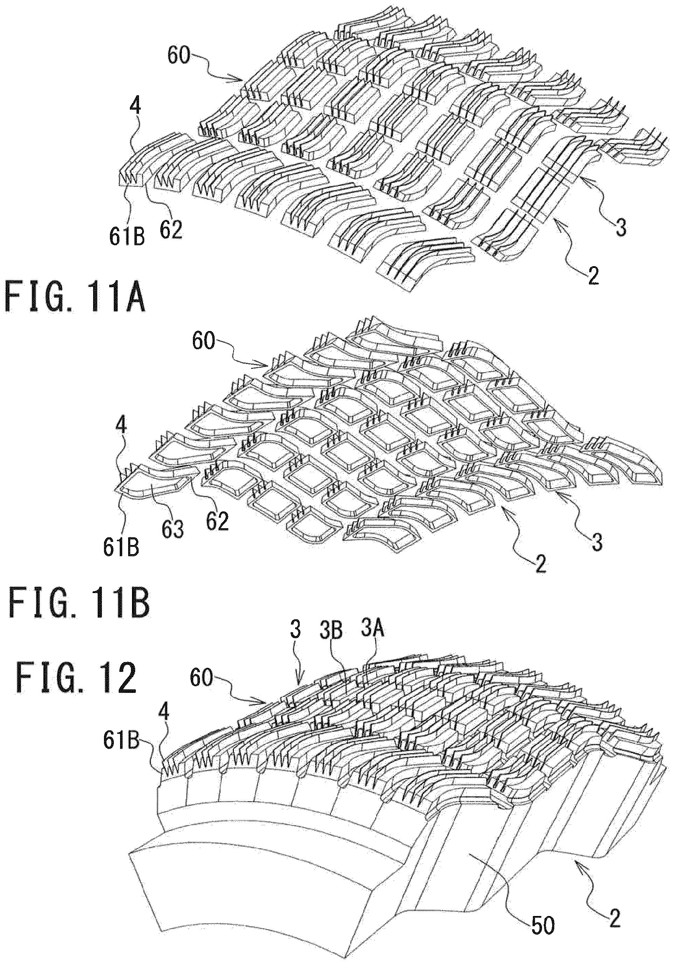

Figs. 11A, 11B are perspective views showing the surface part 60 of the tread shaping part 3 of the 2nd example and show the surface part 60 viewed from two directions. Fig. 11A shows the surface part 60 viewed from the surface side of the tread shaping part 3, and Fig. 11B shows the surface part 60 viewed from the base part 50 side. Fig. 12 is a perspective view showing the original mold 2 of the mold for molding tire 1 of the 2nd example and shows the original mold 2 after production.

As shown in the figures, the surface part 60 has the concave part 63 formed in the attaching part 62 of the surface piece 61B. The surface piece 61B of the 2nd example is formed as with the surface piece 61A of the 1st example, except for the concave part 63. The concave part 63 is a fitting part to be fitted in the convex part 53 of the base part 50 and is formed on each of the plurality of surface pieces 61B of the surface part 60. In addition, the concave part 63 is formed in a part excluding the edge part of the attaching part 62 and is opened toward the base part 50. The concave part 63 is concavely formed at a part on the base part 50 side of the surface piece 61B of the surface part 60.

The base part 50 having the convex part 53 is formed, and the surface part 60 (here, the surface piece 61B of the surface part 60) of the tread shaping part 3 having the concave part 63 is formed. The concave part 63 formed on the surface part 60 is fitted into the convex part 53 formed in the base part 50, so that the surface part 60 is attached to the base part 50. The concave part 63 is attached to the convex part 53 by fitting, so that the surface piece 61B of the surface part 60 is mounted to the convex part 53. The original mold 2 is thereby produced.

By fitting of the convex part 53 into the concave part 63, the surface part 60 (the surface piece 61B) of the tread shaping part 3 can be easily attached to the base part 50 of the original mold 2. When deformation occurs in the surface piece 61B and the surface part 60 before attaching to the base part 50, the shape of the surface piece 61B and the surface part 60 can be corrected by the convex part 53. Due to formation of the concave part 63, the surface piece 61B of the surface part 60 can be made thin. Therefore, the surface piece 61B of the surface part 60 can be easily formed by the three-dimensional modeling method, and the surface piece 61B of the surface part 60 can be accurately formed.

### [3rd Example]

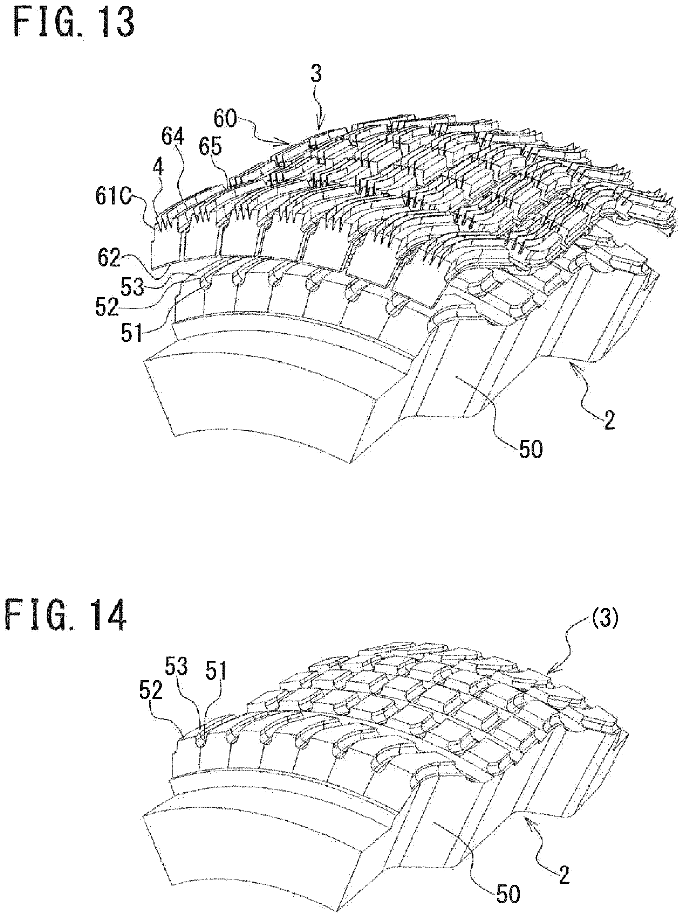

Fig. 13 is a perspective view showing the original mold 2 of the mold for molding tire 1 of the 3rd example and shows the decomposed original mold 2. Fig. 14 is a perspective view showing the base part 50 of the original mold 2 of the 3rd example.

As shown in the figure, the base part 50 of the original mold 2 has convex parts 53 as with the base part 50 of the 2nd example.

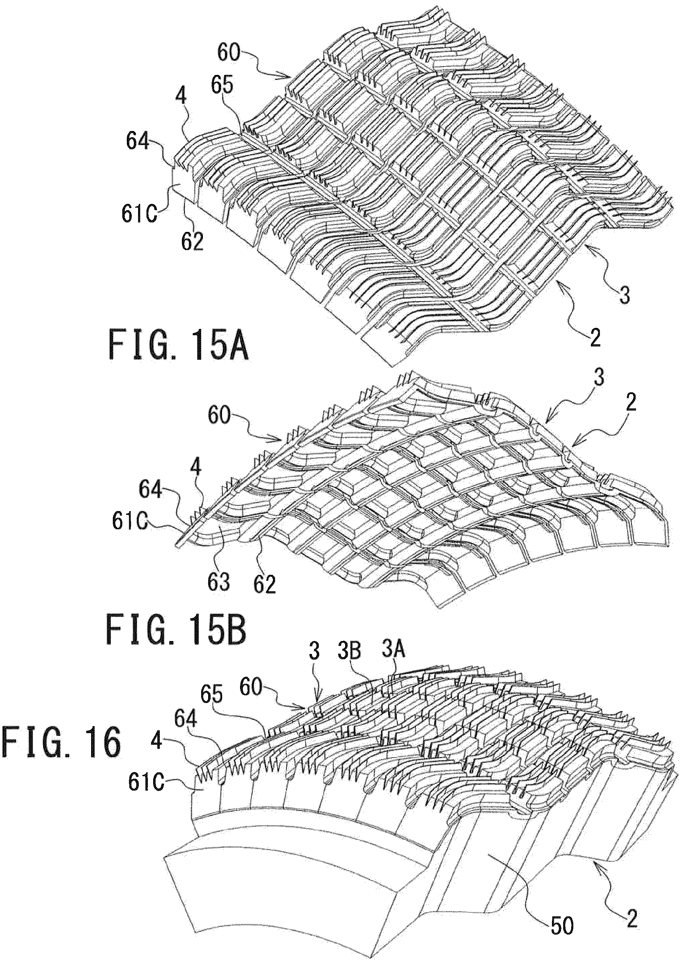

Figs. 15A,15B are perspective views showing the surface part 60 of the tread shaping part 3 of the 3rd example and show the surface part 60 viewed from two directions. Fig. 15A shows the surface part 60 viewed from the surface side of the tread shaping part 3, and Fig. 15B shows the surface part 60 viewed from the base part 50 side. Fig. 16 is a perspective view showing the original mold 2 of the mold for molding tire 1 of the 3rd example and shows the original mold 2 after production.

As shown in the figures, the surface piece 61C of the surface part 60 has the plurality of land parts, the groove shaping parts 65 formed between adjacent land parts 64, and the concave part 63 formed in an attaching part 62. The land part 64 of the surface piece 61C corresponds to the surface piece 61B of the 2nd example, and the concave part 63 is formed on the attaching part 62 of the land part 64. The groove shaping part 65 is a part corresponding to the groove 3A of the tread shaping part 3. The land part 64 and the groove shaping part 65 are alternately formed and continuous with each other.

### [4th Example]

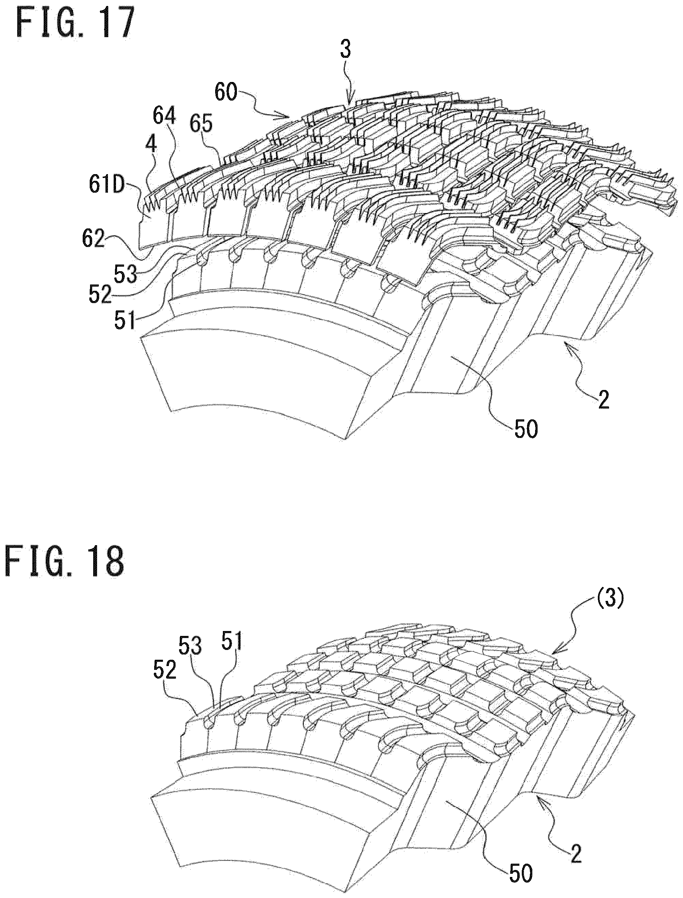

Fig. 17 is a perspective view showing the original mold 2 of the mold for molding tire 1 of the 4th example and shows the decomposed original mold 2. Fig. 18 is a perspective view showing the base part 50 of the original mold 2 of the 4th example.

As shown in the figure, the base part 50 of the original mold 2 has the convex part 53 as with the base part 50 of the 3rd example.

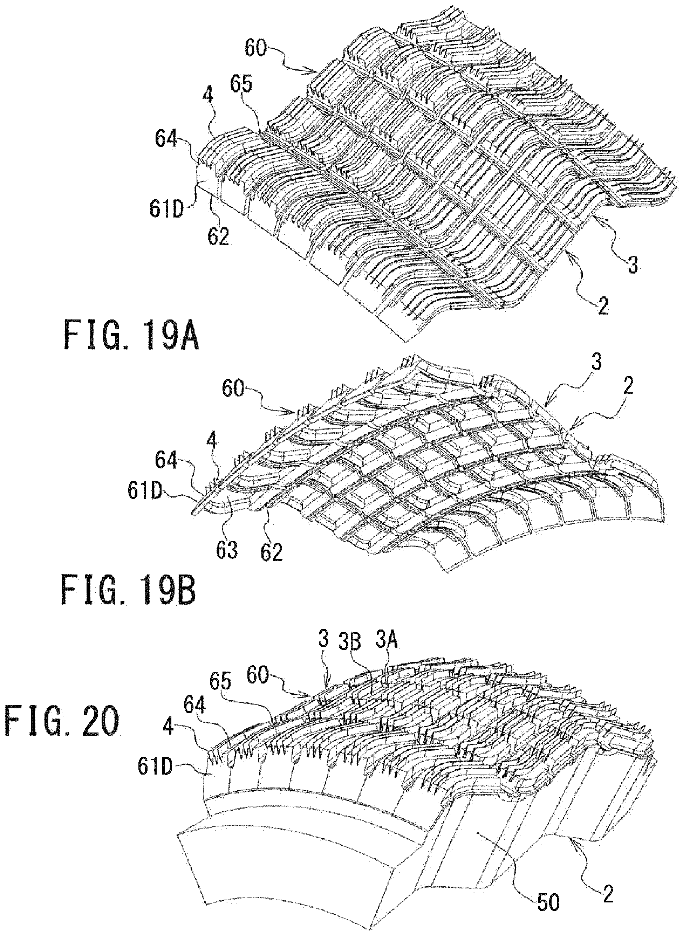

Figs.19A,19B are perspective views showing the surface part 60 of the tread shaping part 3 of the 4th example and show the surface part 60 viewed from two directions. Fig. 19A shows the surface part 60 viewed from the surface side of the tread shaping part 3, and Fig. 19B shows the surface part 60 viewed from the base part 50 side. Fig. 20 is a perspective view showing the original mold 2 of the mold for molding tire 1 of the 4th example and shows the original mold 2 after production.

As shown in the figures, a surface piece 61D of the surface part 60 is formed in a shape that the surface piece 61C of the 3rd example is divided by a groove shaping part 65. In this way, the surface part 60 of the tread shaping part 3 can be divided into surface pieces of various shapes.

### [1st Embodiment]

Fig. 21 is a perspective view showing a part of the surface part 60 of the tread shaping part 3 of the 1st embodiment and shows a surface piece 61E of the surface part 60.

As shown in the figure, the surface piece 61E of the surface part 60 is formed as with the surface piece 61A of the 1st example or the surface piece 61B of the 2nd example, except for the projection 4. The projection 4 has a thin part 4A on the root side (base end side) . The thin part 4A of the projection 4 is formed thinner than the other parts of the projection 4 and is formed along the root of the projection 4.

The thin part 4A that is thinner than the cast-in part 12 of the blade 10 is formed in a part on the root side of the projection 4 of the surface part 60. In addition, by the thin part 4A of the projection 4, a narrow part that is narrower in width than the thickness of the cast-in part 12 is formed in the groove part 25 (see Fig. 1C, Fig. 2A) of the transfer part 23 of the intermediate mold 20. The thin part 4A is formed in whole or in part of the root side part of the projection 4, and the narrow part of the groove part 25 is formed in whole or in part on the opening side of the groove part 25.

By forming the narrow part in the groove part 25, the cast-in part 12 of the blade 10 can be firmly fitted into the groove part 25 of the transfer part 23, and a gap (a gap in the groove part 25) can be restrained from generating between the cast-in part 12 and the transfer part 23. Accordingly, when forming the casting mold 30 by the transfer part 23, burrs of the casting mold 30 can be restrained from generating around the cast-in part 12. In addition, the casting mold 30 can be accurately formed.

It is preferable that the thin part 4A is formed with a width of 0. 2 to 1 mm along the root of the projection 4. When the width of the thin part 4A is narrower than 0. 2 mm, effect of restraining generation of the gap in the groove part 25 is likely to be affected. When the width of the thin part 4A is wider than 1 mm, amount of deformation of the transfer part 23 due to the cast-in part 12 of the blade 10 is likely to increase. By contrast when the width of the thin part 4A is 0. 2 to 1 mm, the generation of gap in the groove part 25 and deformation of the transfer part 23 can be restrained.

It is preferable that the thin part 4A has a thickness which is 80 to 95% of the thickness of a part other than the thin part 4A of the projection 4 (the thickness of the projection). When the thin part 4A is thinner than the thickness of 80% of the thickness of the projection, the amount of deformation of the transfer part 23 due to the cast-in part 12 of the blade 10 is likely to increase. When the thin part 4A is thicker than the thickness of 95% of the thickness of the projection, the effect of restraining the generation of the gap in the groove part 25 is likely to be affected. When the thin part 4A is 80 to 95% of thickness of the thickness of the projection, the generation of the gap in the groove part 25 and the deformation of the transfer part 23 can be restrained.

### Reference Signs List

- 1...: mold for molding tire
- 1A...: projecting part
- 2...: original mold
- 3...: tread shaping part
- 3A...: groove
- 3B...: land part
- 4 ...: projection
- 4A...: thin part
- 10...: blade
- 11...: molding part
- 12...: cast-in part
- 13...: hole
- 20...: intermediate mold
- 21...: rubber part
- 22...: reinforcement part
- 23...: transfer part
- 24...: projecting part
- 25...: groove part
- 30...: casting mold
- 31...: groove
- 32...: land part
- 40...: mold casting
- 41...: riser
- 50...: base part
- 51...: groove
- 52...: covering part
- 53...: convex part
- 60...: surface part
- 61A to 61E...: surface piece
- 62...: attaching part
- 63...: concave part
- 64...: land part
- 65...: groove shaping part

## Claims

1. A method of manufacturing a mold for molding a tire (1) comprising: producing an original mold (2) having a tread shaping part (3) including a tread shape of the tire, producing an intermediate mold (20) having a transfer part (23) to which the tread shaping part of the original mold is transferred, forming a casting mold (30) by the transfer part of the intermediate mold, and casting the mold for molding tire using the casting mold,
wherein the original mold is produced by forming a surface part (60) of the tread shaping part and attaching the surface part to a base part (50) of the original mold, wherein the surface part is divided into a plurality of surface pieces (61A-61E) formed in a surface shape corresponding to a surface shape of a land part (3B) of the tread shaping part (3) and divided at a position corresponding to a groove (3A) of the tread shaping part (3),
wherein a projection of a shape corresponding to a cast-in part (12) of a blade (10) for molding sipe is formed integrally with the surface part of the tread shaping part, a groove part (25) is formed in the transfer part of the intermediate mold by the projection of the surface part, and the cast-in part of the blade is inserted into the groove part of the transfer part;
a thin part (4A) that is thinner than the cast-in part of the blade is formed in a part on a root side of the projection of the surface part, and a narrow part that is narrower in width than the thickness of the cast-in part of the blade is formed in the groove part of the transfer part by the thin part of the projection of the surface part.

2. The method of manufacturing the mold for molding tire according to claim 1,
wherein the plurality of surface pieces (61A-61E) of the surface part are attached to the base part.

3. The method of manufacturing the mold for molding tire according to claim 1 or 2,
wherein a concave part (63) formed on the surface part of the tread shaping part is fitted into a convex part (53) formed on the base part, and the surface part is attached to the base part.

4. The method of manufacturing the mold for molding tire according to any one of claims 1 to 3,
wherein dimension of the projection of the surface part is corrected based on actual dimension of the cast-in part of the blade, and the projection is formed on the surface part with corrected dimension.

## Patentansprüche

1. Verfahren zum Fertigen einer Form zum Formen eines Reifens (1), das Folgendes umfasst: Herstellen einer Urform (2), die einen Laufflächengestaltungsteil (3) aufweist, der eine Laufflächengestalt des Reifens einschließt, Herstellen einer Zwischenform (20), die einen Übertragungsteil (23) aufweist, auf den der Laufflächengestaltungsteil der Urform übertragen wird, Ausbilden einer Gießform (30) durch den Übertragungsteil der Zwischenform, und Gießen der Form zum Formen eines Reifens unter Verwendung der Gießform,
wobei die Urform durch Ausbilden eines Oberflächenteils (60) des Laufflächengestaltungsteils und Befestigen des Oberflächenteils an einem Basisteil (50) der Urform hergestellt wird, wobei der Oberflächenteil in eine Vielzahl von Oberflächenstücken (61A-61E) geteilt ist, die in einer Oberflächengestalt ausgebildet werden, die einer Oberflächengestalt eines Stegteils (3B) des Laufflächengestaltungsteils (3) entspricht, und an einer Position geteilt ist, die einer Rille (3A) des Laufflächengestaltungsteils (3) entspricht,
wobei ein Vorsprung einer Gestalt, die einem eingegossenen Teil (12) eines Blatts (10) zum Formen einer Lamelle entspricht, einstückig mit dem Oberflächenteil des Laufflächengestaltungsteils ausgebildet wird, ein Rillenteil (25) in dem Übertragungsteil der Zwischenform durch den Vorsprung des Oberflächenteils ausgebildet wird, und der eingegossene Teil des Blatts in den Rillenteil des Übertragungsteils eingesetzt wird;
ein dünner Teil (4A), der dünner ist als der eingegossene Teil des Blatts, in einem Teil auf einer Fußseite des Vorsprungs des Oberflächenteils ausgebildet wird, und ein schmaler Teil, der in der Breite schmaler ist als die Dicke des eingegossenen Teils des Blatts, in dem Rillenteil des Übertragungsteils durch den dünnen Teil des Vorsprungs des Oberflächenteils ausgebildet wird.

2. Verfahren zum Fertigen der Form zum Formen eines Reifens nach Anspruch 1,
wobei die Vielzahl von Oberflächenstücken (61A-61E) des Oberflächenteils an dem Basisteil befestigt wird.

3. Verfahren zum Fertigen der Form zum Formen eines Reifens nach Anspruch 1 oder 2,
wobei ein konkaver Teil (63), der an dem Oberflächenteil des Laufflächenformungsteils ausgebildet wird, in einen konvexen Teil (53) gepasst wird, der an dem Basisteil ausgebildet wird, und der Oberflächenteil an dem Basisteil befestigt wird.

4. Verfahren zum Fertigen der Form zum Formen eines Reifens nach einem der Ansprüche 1 bis 3,
wobei eine Abmessung des Vorsprungs des Oberflächenteils auf Grundlage einer tatsächlichen Abmessung des eingegossenen Teils des Blatts berichtigt wird, und der Vorsprung an dem Oberflächenteil mit einer berichtigten Abmessung ausgebildet wird.

## Revendications

1. Procédé de fabrication d'un moule pour mouler un pneumatique (1), comprenant : la production d'un moule original (2) comportant une partie de façonnage de bande de roulement (3) incluant un aspect de bande de roulement du pneumatique, la production d'un moule intermédiaire (20) comportant une partie de transfert (23) vers laquelle la partie de façonnage de bande de roulement du moule original est transférée, la formation d'un moule de coulée (30) par la partie de transfert du moule intermédiaire, et la coulée du moule pour mouler un pneumatique en utilisant le moule de coulée,
dans lequel le moule original est produit en formant une partie de surface (60) de la partie de façonnage de bande de roulement et en fixant la partie de surface sur une partie de base (50) du moule original, dans lequel la partie de surface est divisée en une pluralité de pièces de surface (61A-61E) formées en un aspect de surface correspondant à un aspect de surface d'une partie d'appui (3B) de la partie de façonnage de bande de roulement (3) et divisée au niveau d'une position correspondant à une rainure (3A) de la partie de façonnage de bande de roulement (3),
dans lequel une saillie d'une forme correspondant à une partie coulée (12) d'une lame (10) pour mouler une lamelle est formée d'un seul tenant avec la partie de surface de la partie de façonnage de bande de roulement, une partie de rainure (25) est formée dans la partie de transfert du moule intermédiaire par la saillie de la partie de surface, et la partie coulée de la lame est insérée dans la partie de rainure de la partie de transfert ;
une partie fine (4A), qui est plus fine que la partie coulée de la lame, est formée dans une partie sur un côté de racine de la saillie de la partie de surface, et une partie étroite, qui est plus étroite en largeur que l'épaisseur de la partie coulée de la lame, est formée dans la partie de rainure de la partie de transfert par la partie fine de la saillie de la partie de surface.

2. Procédé de fabrication du moule pour mouler un pneumatique selon la revendication 1,
dans lequel la pluralité de pièces de surface (61A-61E) de la partie de surface sont fixées sur la partie de base.

3. Procédé de fabrication du moule pour mouler un pneumatique selon la revendication 1 ou 2,
dans lequel une partie concave (63) formée sur la partie de surface de la partie de façonnage de bande de roulement est ajustée dans une partie convexe (53) formée sur la partie de base, et la partie de surface est fixée sur la partie de base.

4. Procédé de fabrication du moule pour mouler un pneumatique selon l'une quelconque des revendications 1 à 3,
dans lequel une dimension de la saillie de la partie de surface est corrigée sur la base d'une dimension effective de la partie coulée de la lame, et la saillie est formée sur la partie de surface avec une dimension corrigée.
